# FASCICULE DE BREVET EUROPEEN

(11) **EP 0 710 822 B1**
(45) Date de publication et mention de la délivrance du brevet: **10.02.1999**
(21) Numéro de dépôt: 95402452.7
(22) Date de dépôt: 03.11.1995
(51) Int. Cl.: G01H 11/08

(54) **Capteur de vibrations piézoélectrique**
Piezoelektrischer Schwingungssensor
Piezoelectric vibration sensor

(30) Priorité: 04.11.1994 FR 9413215
(43) Date de publication de la demande: 08.05.1996
(73) Titulaire: SAGEM SA, 75783 Paris Cédex 16 (FR)
(72) Inventeur: Housni,Jamal, F-92400 Courbevoie (FR)
(74) Mandataire: Fruchard, Guy

(56) Documents cités:
- WO-A-89/05199
- WO-A-91/14350
- DE-A- 3 230 060
- DE-C- 825 998
- DE-C- 857 205
- FR-A- 852 764
- GB-A- 569 510
- PATENT ABSTRACTS OF JAPAN vol. 004, no. 067 (E-011) 20 Mai 1980 & JP-A-55 037 068 (MATSUSHITA ELECTRIC IND CO LTD) 14 Mars 1980
- PATENT ABSTRACTS OF JAPAN vol. 011, no. 165 (E-510) 27 Mai 1987 & JP-A-62 000 200 (MATSUSHITA ELECTRIC IND CO LTD) 06 Janvier 1987

## Description

La présente invention concerne un capteur de vibrations piézoélectrique.

On connaît des capteurs de vibrations à accéléromètre, en particulier des capteurs crâniens destinés à remplacer un microphone pour capter les paroles prononcées par un utilisateur portant le capteur. Les capteurs crâniens connus à ce jour comportent en général un tampon de mousse comprenant une cavité centrale équipée d'un support en caoutchouc dans lequel est enchâssé l'accéléromètre, la partie du support en caoutchouc dans laquelle l'accéléromètre est enchâssé étant en saillie par rapport à une surface environnante du support pour une position de repos du capteur. Lors de l'utilisation, le capteur est disposé sur le crâne de l'utilisateur et est maintenu appliqué contre celui-ci par un casque de façon que la partie contenant l'accéléromètre soit comprimée contre le crâne de l'utilisateur. Lorsque l'utilisateur émet des sons, ceux-ci sont transmis par la boîte crânienne de l'utilisateur à l'accéléromètre qui transmet ainsi le son produit à un dispositif d'amplification généralement inséré dans le casque.

La transmission des sons émis est généralement satisfaisante mais, dans les dispositifs existants, l'accéléromètre est couplé au support de façon telle que le capteur est sensible non seulement aux sons émis par l'utilisateur mais également aux bruits environnants, de sorte que les sons émis par l'utilisateur deviennent inaudibles lorsque l'utilisateur se déplace dans un environnement bruyant ou lorsque les déplacements de l'utilisateur sont eux-mêmes générateurs de bruit, par exemple lorsque l'utilisateur est un motard, le frottement de l'air sur le casque du motard générant un bruit d'autant plus important que la vitesse du motard est plus élevée.

En outre, en raison même de son principe de fonctionnement, l'accéléromètre est sensible à tous les mouvements auxquels le support est soumis et génère donc lui-même un bruit qui est fonction des mouvements du support.

On connaît également du document WO-A-91/14350 un microphone comprenant une pastille piézoélectrique montée dans un boîtier et associée selon un montage élastique à un plot central prenant appui sur la pastille piézoélectrique.

Toutefois, la pastille piézoélectrique est montée dans le boîtier selon un montage rigide. Si le microphone selon ce document était utilisé comme capteur de vibrations, les bruits environnants auraient tendance à déplacer le boîtier par rapport au plot central, de sorte que, par réaction, celui-ci déformerait la pastille piézoélectrique et induirait donc, dans le signal émis par le capteur, un bruit correspondant au bruit environnant.

Selon l'invention, on propose un capteur de vibrations comportant une pastille piézoélectrique disposée dans un boîtier comprenant une paroi avant et une paroi arrière, et un organe de transmission de vibrations porté par la face arrière de la paroi avant selon un montage élastique avant par rapport à la pastille piézoélectrique et prenant appui sur la pastille piézoélectrique, caractérisé en ce que la paroi avant et la paroi arrière sont mobiles l'une par rapport à l'autre et en ce qu'un organe élastique arrière est interposé entre la pastille piézoélectrique et la paroi arrière du boîtier, cet organe élastique arrière ayant une raideur inférieure à celle du montage élastique avant.

Ainsi, lorsque la paroi arrière est soumise à des vibrations, soit du fait du bruit environnant, soit du fait de vibrations auxquelles la paroi arrière est directement soumise, ces vibrations sont amorties par l'organe élastique arrière et n'influent donc pas sur la position relative de l'organe de transmission de vibrations par rapport à la pastille piézoélectrique, de sorte que le signal parasite correspondant est éliminé.

Selon une version avantageuse de l'invention, la paroi arrière comprend un plot central arrière en saillie vers l'avant et prenant appui sur une face de la pastille piézoélectrique opposée à l'organe de transmission de vibrations. Ainsi, lorsque la paroi avant est en appui sur une surface rigide telle que le crâne d'un utilisateur, les vibrations appliquées au plot central arrière sont contrées par l'organe de transmission avant qui est immobilisé sur la surface rigide, de sorte que le capteur de vibrations ne transmet que les vibrations appliquées à la paroi avant.

Selon un autre aspect avantageux de l'invention, la pastille piézoélectrique est montée sur un support comprenant des ouvertures ayant des dimensions suffisantes pour maintenir deux faces opposées de la pastille piézoélectrique sensiblement en pression lorsque le capteur est soumis à un bruit environnant. Ainsi, la pastille piézoélectrique ne subit aucune déformation du fait du bruit environnant et transmet donc des signaux reproduisant très fidèlement les vibrations que l'on souhaite mesurer.

D'autres caractéristiques et avantages de l'invention apparaîtront à la lecture de la description qui suit d'un mode de réalisation particulier non limitatif de l'invention, en relation avec les figures ci-jointes parmi lesquelles:
- la figure 1 est une vue en coupe selon la ligne I-I de la figure 2,
- la figure 2 est une vue en perspective éclatée, partiellement écorchée, du capteur selon l'invention.
- la figure 3 est une vue en coupe analogue à celle de la figure 1 d'une variante de réalisation de l'invention.

Dans le mode de réalisation illustré, le capteur de vibrations selon l'invention est destiné à être utilisé comme capteur crânien pour transmettre des sons produits par un utilisateur du capteur.

En référence aux figures, on désignera par face avant la face des composants du capteur selon l'invention qui est tournée vers la source de vibrations, tandis que la face opposée sera dénommée face arrière, bien que le capteur puisse indifféremment être disposé au-dessus, sur le côté ou au-dessous de la source de vibrations.

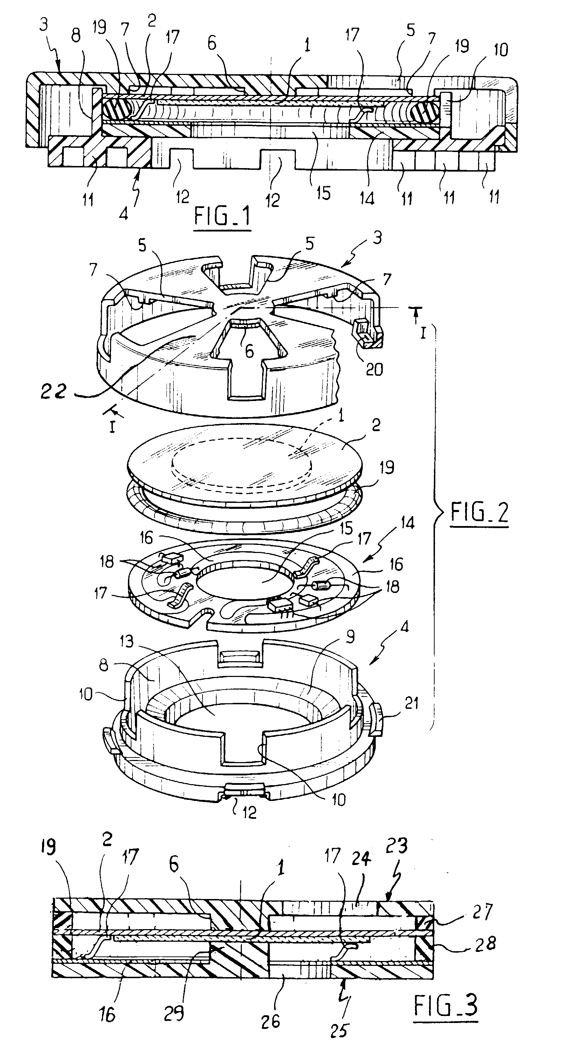

Selon le premier mode de réalisation, illustré sur les figures 1 et 2, le capteur de vibrations selon l'invention comporte une pastille de céramique piézoélectrique circulaire 1 fixée à la face arrière d'une plaque conductrice circulaire 2 disposée dans un boîtier comportant une paroi avant en forme de couvercle généralement désigné en 3 et une paroi arrière formant un fond généralement désigné en 4.

Le couvercle 3 en forme de coupelle à paroi latérale cylindrique est pourvu d'ouvertures 5 qui s'étendent radialement dans la paroi frontale du couvercle ainsi que dans la paroi latérale de celui-ci. Sur la face arrière de la paroi frontale, le couvercle 3 comporte un organe de transmission de vibrations formé par un plot central 6 supporté par des bras élastiques radiaux 22 formant un montage élastique avant. Le plot central 6 s'étend en saillie vers l'arrière et prend appui sur la partie centrale de la pastille de céramique piézoélectrique 1 par l'intermédiaire de la plaque métallique 2. Le couvercle 3 comporte également des secteurs annulaires 7 en saillie vers l'arrière à une distance du centre du couvercle qui correspond sensiblement au diamètre de la plaque conductrice 2.

Le fond 4 du boîtier comporte une paroi latérale cylindrique 8 dont la face interne a un diamètre très légèrement supérieur au diamètre de la plaque conductrice 2, et dont la face externe a un diamètre plus faible que la paroi latérale du couvercle 3. La paroi latérale 8 est reliée à une cloison arrière 9 dont la face avant forme une surface d'appui s'étendant radialement à l'intérieur de la paroi latérale 8 ainsi qu'à l'extérieur de celle-ci. La paroi latérale 8 comporte des échancrures 10 qui coïncident sensiblement avec les ouvertures 5 dans la paroi latérale du couvercle 3. Sur sa face arrière, la cloison arrière 9 du fond 4 comporte des secteurs annulaires 11 en saillie vers l'arrière. Les extrémités des secteurs annulaires 11 délimitent des ouvertures radiales 12 qui communiquent avec une ouverture centrale 13 dans la cloison arrière 9 du fond 4.

Dans le mode de réalisation préféré illustré, le capteur comporte également un circuit imprimé généralement désigné en 14 comprenant un substrat annulaire ayant un diamètre externe sensiblement égal au diamètre interne de la paroi latérale 8, et pourvu d'une ouverture centrale 15. Sur sa face avant, le circuit imprimé 14 comporte des pistes conductrices 16 reliées à des pattes élastiques conductrices 17, et auxquelles sont raccordés des composants 18 formant un circuit de traitement des signaux électriques reçus par les pattes élastiques conductrices 17.

Lors du montage, le circuit imprimé 14 est disposé dans le fond 4 et prend appui sur l'épaulement interne formé par la cloison arrière 9 du fond 4. Un joint élastique annulaire 19 est disposé sur la face avant du circuit imprimé 14 et prend appui sur le pourtour de celui-ci. La plaque conductrice 2 portant la pastille piézoélectrique 1 est ensuite disposée dans le fond 4 du boîtier. On remarquera à ce propos que, dans le mode de réalisation illustré, la pastille piézoélectrique 1 a un diamètre inférieur au diamètre de la plaque conductrice 2 et que les pattes électriques conductrices 17 sont disposées pour que l'une d'entre elles prenne appui sur la plaque conductrice 2 elle-même en contact électrique avec la face avant de la pastille piézoélectrique, tandis que l'autre patte conductrice 17 prend appui sur la face arrière de la pastille piézoélectrique 1, comme illustré par la figure 1. Le couvercle 3 est ensuite mis en place et est verrouillé sur le fond 4 en faisant coopérer des pattes de verrouillage 20 portées par le couvercle et s'étendant radialement vers l'intérieur avec des pattes de verrouillage 21 portées par le fond 4 et s'étendant radialement vers l'extérieur.

Lorsque le boîtier est fermé, les secteurs en saillie 7 du couvercle 3 prennent appui sur la plaque conductrice 2 et compriment le joint 19, de sorte que la pastille piézoélectrique 1 est maintenue de façon élastique à l'intérieur du boîtier. Parallèlement, le plot central 6 du couvercle 3 prend appui au centre de la plaque conductrice 2. Le circuit imprimé 14 est relié à l'extérieur par un câble non représenté.

Les ouvertures 5 du couvercle, l'ouverture centrale 15 du circuit imprimé 14, l'ouverture centrale 13 du fond 4 et les échancrures 12 ont des dimensions suffisantes pour maintenir les deux faces opposées de la pastille piézoélectrique 1 sensiblement en équipression lorsque le capteur est soumis à un bruit environnant. On obtient ainsi un capteur différentiel sensible essentiellement aux vibrations qui sont transmises par le plot central 6 du couvercle 3 lors du contact de la face avant de la paroi frontale du couvercle avec une source de vibrations.

Le capteur crânien selon l'invention est ensuite incorporé de façon conventionnelle à un conditionnement permettant de le monter soit dans le fond d'un casque pour être en contact avec le sommet de la boîte crânienne d'un utilisateur, soit sur le côté du casque, voire même dans la mentonnière, de façon que la face avant du couvercle 3 soit en contact avec le menton de l'utilisateur qui transmet les sons émis par l'utilisateur.

Lorsque le fond 4 est soumis à des vibrations, par exemple des vibrations provenant du frottement de l'air sur le casque d'un motard, les mouvements du fond vers l'avant sont amortis par le joint élastique 19, de sorte que les effets de ces vibrations sont minimisés.

La figure 3 illustre une variante de réalisation de l'invention. Selon cette variante de réalisation, le capteur comporte une paroi avant 23 percée d'ouvertures 24 assurant le passage du bruit environnant, et une paroi arrière 25 percée d'ouvertures 26 assurant également un passage du bruit environnant. Une plaque 2 portant une pastille piézoélectrique 1 est montée entre la paroi avant et la paroi arrière par l'intermédiaire d'un anneau élastique avant 27 et d'un anneau élastique arrière 28 qui sont par exemple collés respectivement à la plaque support 2 et à la paroi avant 23 pour l'anneau avant 27, et à la plaque support 2 et à la paroi arrière 25 pour l'anneau arrière 28. L'anneau avant 27 réalise le montage élastique avant tandis que l'anneau 28 joue le rôle d'organe élastique arrière. Les anneaux 27 et 28 sont par exemple en caoutchouc ayant respectivement une dureté Shore de 60 et 40, de sorte que l'organe élastique arrière a une raideur inférieure à celle du montage élastique avant. En outre, contrairement au montage précédent, la paroi arrière est mobile par rapport à la paroi avant tant vers l'arrière que vers l'avant.

Par ailleurs, la paroi avant comporte comme précédemment un plot central 6 qui prend appui sur la pastille piézoélectrique 1 par l'intermédiaire de la plaque support 2, et la paroi arrière 25 comporte un plot central 29 qui prend appui sur une face de la pastille piézoélectrique opposée au plot 6.

Lors de l'utilisation du capteur selon l'invention, la paroi avant du capteur est mise en appui sur la source des vibrations à mesurer, par exemple une partie de la boîte crânienne d'un utilisateur, tandis que la paroi arrière reste libre de se déplacer, par exemple en l'incorporant à une mousse à cellules ouvertes.

D'une façon plus générale, le capteur est de préférence monté dans un conditionnement assurant, d'une part, un meilleur confort de l'utilisateur lorsque celui-ci porte le capteur et, d'autre part, un amortissement des vibrations environnantes auxquelles le capteur pourrait être soumis.

La structure du capteur selon l'invention assure alors une transmission à la pastille piézoélectrique, des vibrations auxquelles la paroi avant est soumise, tandis que les vibrations agissant sur la paroi arrière sont soit contrées par l'appui rigide du plot 6 soit amorties par l'anneau élastique arrière 28.

Bien entendu, l'invention n'est pas limitée au mode de réalisation décrit et on peut y apporter des variantes de réalisation sans sortir du cadre de l'invention tel que défini par les revendications.

En particulier, bien que le capteur selon l'invention ait été décrit avec une face avant plane adaptée à un contact doux avec la boîte crânienne ou le menton d'un utilisateur, on peut également réaliser le capteur selon l'invention avec un plot en saillie sur la face avant pour réaliser un contact ponctuel avec une source de vibrations, la géométrie du plot étant adaptée à la mesure à effectuer.

Bien que le circuit de traitement 14 ait été illustré sous forme d'un circuit imprimé intégré au capteur on peut également prévoir un circuit de traitement séparé du capteur, par exemple un circuit de traitement intégré au conditionnement du capteur.

Bien que la pastille piézoélectrique ait été illustrée sous une forme circulaire, on peut également la réaliser sous forme d'une rondelle annulaire découpée dans un film piézoélectrique et montée de façon semblable à celle décrite précédemment en adaptant la géométrie du boîtier à celle de la pastille piézoélectrique.

## Revendications

1. Capteur de vibrations comportant une pastille piézoélectrique (1) disposée dans un boîtier comprenant une paroi avant (3) et une paroi arrière (4), et un organe de transmission de vibrations (6) porté par la face arrière de la paroi avant selon un montage élastique avant (22) par rapport à la pastille piézoélectrique et prenant appui sur la pastille piézoélectrique, caractérisé en ce que la paroi avant et la paroi arrière sont mobiles l'une par rapport à l'autre et en ce qu'un organe élastique arrière (19) est interposé entre la pastille piézoélectrique et la paroi arrière du boîtier, cet organe élastique arrière ayant une raideur inférieure à celle du montage élastique avant.

2. Capteur de vibrations selon la revendication 1, caractérisé en ce que la paroi arrière comprend un plot central arrière (29) en saillie vers l'avant et prenant appui sur une face de la pastille piézoélectrique opposée à l'organe de transmission de vibrations.

3. Capteur de vibrations selon la revendication 1 ou la revendication 2, caractérisé en ce que la pastille piézoélectrique est montée sur un support (3, 4) comportant des ouvertures (5, 12, 13) ayant des dimensions suffisantes pour maintenir deux faces opposées de la pastille piézoélectrique (1) sensiblement en équipression lorsque le capteur est soumis à un bruit environnant.

4. Capteur de vibrations selon l'une des revendications 1 à 3, caractérisé en ce que la pastille piézoélectrique (1) est portée par une plaque conductrice (2).

5. Capteur de vibrations selon la revendication 4, caractérisé en ce qu'il comporte un circuit imprimé (14) disposé de façon adjacente à la pastille piézoélectrique (1) et pourvu de pattes élastiques conductrices (17) prenant appui sur la pastille piézoélectrique (1) et sur la plaque conductrice (2).

## Patentansprüche

1. Schwingungssensor mit einer piezoelektrischen Scheibe (1), die in einem Gehäuse mit einer Vorderwand (3) und einer Rückwand (4) angeordnet ist, und einem Schwingungsübertragungsorgan (6), das an der Rückseite der Vorderwand in einer vorderen elastischen Anordnung (22) relativ zur piezoelektrischen Scheibe gehalten ist und auf der piezoelektrischen Scheibe zur Anlage kommt, dadurch **gekennzeichnet,** daß die Vorderwand und die Rückwand relativ zueinander beweglich sind, und daß ein hinteres elastisches Organ (19) zwischen der piezoelektrischen Scheibe und der Rückwand des Gehäuses angeordnet ist, wobei das hintere elastische Organ eine gegenüber der der vorderen elastischen Anordnung niedrigere Steifigkeit hat.

2. Schwingungssensor nach Anspruch 1, dadurch **gekennzeichnet,** daß die Rückwand ein hinteres, nach vorne vorspringendes zentrales Kontaktstück (29) hat, das auf einer Seite der piezoelektrischen Scheibe zur Anlage kommt, die dem Schwingungsübertragungsorgan abgewandt ist.

3. Schwingungssensor nach Anspruch 1 oder Anspruch 2, dadurch **gekennzeichnet**, daß die piezoelektrische Scheibe auf einem Träger (3, 4) befestigt ist, der Öffnungen (5, 12, 13) mit Abmessungen hat, die ausreichen, um zwei entgegengesetzte Seiten der piezoelektrischen Scheibe (1) im wesentlichen unter gleichem Druck zu halten, wenn der Sensor einem Umgebungsgeräusch ausgesetzt ist.

4. Schwingungssensor nach einem der Ansprüche 1 bis 3, dadurch **gekennzeichnet,** daß die piezoelektrische Scheibe (1) von einer leitenden Platte (2) getragen wird.

5. Schwingungssensor nach Anspruch 4, dadurch **gekennzeichnet,** daß er eine gedruckte Schaltung (14) hat, die angrenzend zur piezoelektrischen Scheibe (1) angeordnet und mit leitenden elastischen Laschen (17) versehen ist, die auf der piezoelektrischen Scheibe (1) und auf der leitenden Platte (2) zur Anlage kommen.

## Claims

1. A vibration pickup including a piezoelectric pellet (1) disposed in a housing having a front wall (3) and a rear wall (4), and a vibration transmission member (6) carried by the rear face of the front wall via a front resilient mount (22) in front of the piezoelectric pellet and bearing against the piezoelectric pellet, the pickup being characterized in that the front wall and the rear wall are movable relative to each other and in that a rear resilient member (19) is interposed between the piezoelectric pellet and the rear wall of the housing, the stiffness of said rear resilient member being less than the stiffness of the front resilient mount.

2. A vibration pickup according to claim 1, characterized in that the rear wall includes a forwardly-projecting rear central stud (29) bearing against a face of the piezoelectric pellet remote from the vibration transmission member.

3. A vibration pickup according to claim 1 or claim 2, characterized in that the piezoelectric pellet is mounted on a support (3, 4) having openings (5, 12. 13) of dimensions that are large enough to maintain substantially equal pressures over two opposite faces of the piezoelectric pellet (1) when the pickup is subjected to ambient noise.

4. A vibration pickup according to any one of claims 1 to 3, characterized in that the piezoelectric pellet (1) is carried by a conductive plate (2).

5. A vibration pickup according to claim 4, characterized in that it includes a printed circuit (14) disposed adjacent to the piezoelectric pellet (1) and provided with conductive resilient tabs (17) bearing against the piezoelectric pellet (1) and against the conductive plate (2).
